# EUROPEAN PATENT APPLICATION

(11) **EP 4 672 486 A2**
(43) Date of publication of application: **31.12.2025**
(21) Application number: 25215283.0
(22) Date of filing: 12.11.2025
(51) Int. Cl.: H01M 50/569, H01M 50/519, H01M 50/503, H01M 50/502, H01M 50/507

(54) **BATTERY PACK**

(30) Priority: 25.02.2025 CN 202510213566
(71) Applicant: JINKO SOLAR CO., LTD, ShangRao, Jiangxi 334100 (CN); Zhejiang Jinko Energy Storage Co., Ltd., Jiaxing, Zhejiang 314415 (CN)
(72) Inventor: SHI, Yanyan, Haining, 314415 (CN)
(74) Representative: Haseltine Lake Kempner LLP

(57) **Abstract**

A battery includes: a housing; a plurality of electric cells accommodated in the housing; and a signal acquisition assembly. The signal acquisition assembly includes: an insulating bracket provided with a plurality of slots; a circuit board provided on the insulating bracket; a plurality of connecting members accommodated in the plurality of slots; and a plurality of connecting pieces. Two ends of each connecting piece are connected to the circuit board and one connecting member, respectively. Each connecting member includes two rigid busbars connected by a flexible portion. The two rigid busbars are connected to poles of adjacent two electric cells, respectively.

## Description

### TECHNICAL FIELD

The present invention relates to the field of battery technology, and in particular to a battery pack.

### BACKGROUND

Battery energy storage modules are key technologies in the field of new energy. Battery energy storage modules are usually implemented by battery packs. A battery pack typically includes a plurality of battery modules. The battery module consists of a frame structure and a plurality of batteries disposed within the frame structure. The batteries within the battery module are connected via connecting assembly. The battery pack BMS system collects the voltage and temperature of each battery in the battery module through collection circuits in the connection assembly.

### SUMMARY

Accordingly, it is necessary to provide a battery pack.

A battery is provided, including:
a housing;
a plurality of electric cells accommodated in the housing; and
a signal acquisition assembly including:
an insulating bracket provided with a plurality of slots;
a circuit board provided on the insulating bracket;
a plurality of connecting members accommodated in the plurality of slots; and
a plurality of connecting pieces,
wherein two ends of each connecting piece are connected to the circuit board and one connecting member, respectively, each connecting member includes two rigid busbars connected by a flexible portion, the two rigid busbars are connected to poles of adjacent two electric cells, respectively.

In some embodiments, two ends of the flexible portion are welded to upper surfaces of the two rigid busbars, respectively.

In some embodiments, the connecting member satisfies L1*t1≥L2*t2, where L1 is a width of each rigid busbar, L2 is a width of the flexible portion, t1 is a thickness of the connecting member, and t2 is a thickness of the flexible portion.

In some embodiments, the flexible portion includes a fusing region extending along a width direction of the connecting member, a width of the fusing region is a same as a width of the flexible portion, and a fusing point of the fusing region is less than a fusing point of the two rigid busbars.

In some embodiments, the connecting piece is connected to the flexible portion, the flexible portion is bent in a direction away from the electric cell, and a top of the flexible portion extends out of the slot.

In some embodiments, an upper surface of the flexible portion is provided with a groove, the connecting piece is accommodated in the groove, and an upper surface of the connecting piece is no higher than the upper surface of the flexible portion.

In some embodiments, the connecting piece is substantially S-shaped, and includes a hollow portion having a plurality of hollows arranged side by side.

In some embodiments, the plurality of hollows extend from an upper portion of the circuit board to an upper portion of the slot.

In some embodiments, the battery pack further includes an insulating adhesive covering the hollow portion and adhered to the connecting member, the insulating adhesive being embedded in the plurality of hollows.

In some embodiments, a first buffer layer is provided between the insulating bracket and the electric cell.

In some embodiments, the battery pack further includes a cover plate and a second buffer layer. The cover plate is cooperated with the housing and located on a side of the signal acquisition assembly away from the electric cell, and the second buffer layer is provided between the circuit board and the cover plate.

According to the aforementioned battery pack, an insulating bracket is used to support and mount other elements in the signal acquisition assembly, which simplifies the architecture of the signal acquisition assembly. The connecting member includes a combination of rigid busbars and flexible portion, which can not only ensure the reliability of the connection with the pole of electric cell, but also can provide a buffer space for the electric cell, allowing the expansion force of the battery to be released in the flexible portion, and avoiding damage to the connection between the rigid busbar and the pole of electric cell. In addition, the flexible portion is bent in a direction away from the electric cell, and a top of the flexible portion extends out of the slot. In this way, when adjacent electric cells move relative to each other, the top of the flexible portion can be deformed outside the slot. The top of the flexible portion does not occupy the space inside the slot when deforming, such that there is no need to reserve a large space inside the slot, which makes the battery pack more compact.

### BRIEF DESCRIPTION OF THE DRAWINGS

To better describe and illustrate the embodiments and/or examples of the disclosure disclosed herein, reference may be made to one or more accompanying drawings. The additional details or examples used to describe the accompanying drawings are not to be construed as limiting the scope of any one of the disclosed disclosures, the presently described embodiments and/or examples, and the presently understood preferred mode of the disclosure.
FIG. 1 is a perspective view of a battery pack according to an embodiment of the present invention.
FIG. 2 is another perspective view of the battery pack of FIG. 1 with the cover removed.
FIG. 3 is a perspective view of a signal acquisition circuit according to an embodiment of the present invention.
FIG. 4 is a perspective view of an insulating bracket according to an embodiment of the present invention.
FIG. 5 is a perspective view of a connecting member according to an embodiment of the present invention.
FIG. 6 is a top view of the connecting member shown in FIG. 5.
FIG. 7 is a side view of the connecting member shown in FIG. 5.
FIG. 8 is a perspective view of a connecting member according to another embodiment of the present invention.
FIG. 9 is a perspective view of a connecting piece according to an embodiment of the present invention.
FIG. 10 is a perspective view of a connecting piece according to another embodiment of the present invention.
FIG. 11 is a top view of the battery pack of FIG. 1.
FIG. 12 is a cross-sectional view taken along line A-A of FIG. 11.
FIG. 13 is an enlarged view of portion B in FIG. 12.

### Reference Numerals:

100, battery pack; 10, housing; 110, box; 120, cover; 20, electric cell; 210, pole; 30, signal acquisition assembly; 310, insulating bracket; 311, slot; 312, through-hole; 320, circuit board; 330, connecting member; 331, rigid busbar; 3311, welding hole; 3312, notched corner; 332, flexible portion; 333, welding joint; 340, connecting piece; 341, first welding end; 3411, aperture; 3142, protective piece; 342, hollow portion; 343, second welding end; 344, reinforcing rib; 350, insulating adhesive; 40, first buffer layer; 50, second buffer layer.

### DETAILED DESCRIPTION

In order to make the above objectives, features and advantages of the present invention more obvious and understandable, specific embodiments of the present invention are described in detail below with reference to the accompanying drawings. In the following description, many specific details are set forth in order to fully understand the present invention. However, the present invention can be implemented in many other ways different from those described herein, and those skilled in the art can make similar improvements without departing from the connotation of the present invention. Therefore, the present invention is not limited by the specific embodiments disclosed below.

In the description of the present invention, it should be understood that terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", etc. indicate an orientation or a positional relationship based on an orientation or a positional relationship shown in the drawings, which is only for the purpose of facilitating and simplifying the description of the present invention, rather than indicates or implies that the device or elements must have a specific orientation, be constructed and operated in a specific orientation, and therefore cannot be construed as limitation of the present invention.

In addition, the terms "first" and "second" are used for descriptive purposes only, which cannot be construed as indicating or implying a relative importance, or implicitly specifying the number of the indicated technical features. Therefore, the features defined with "first" and "second" may explicitly or implicitly include at least one of the features. In the description of the present invention, "plurality" means the plurality of, such as two, three, etc., unless otherwise specifically defined.

During the recycling of conventional battery packs, the electric cells have the characteristic of deformation and expansion. In addition, vibration is inevitable during installation, transportation and use, which can easily damage the acquisition circuit and pose a safety hazard.

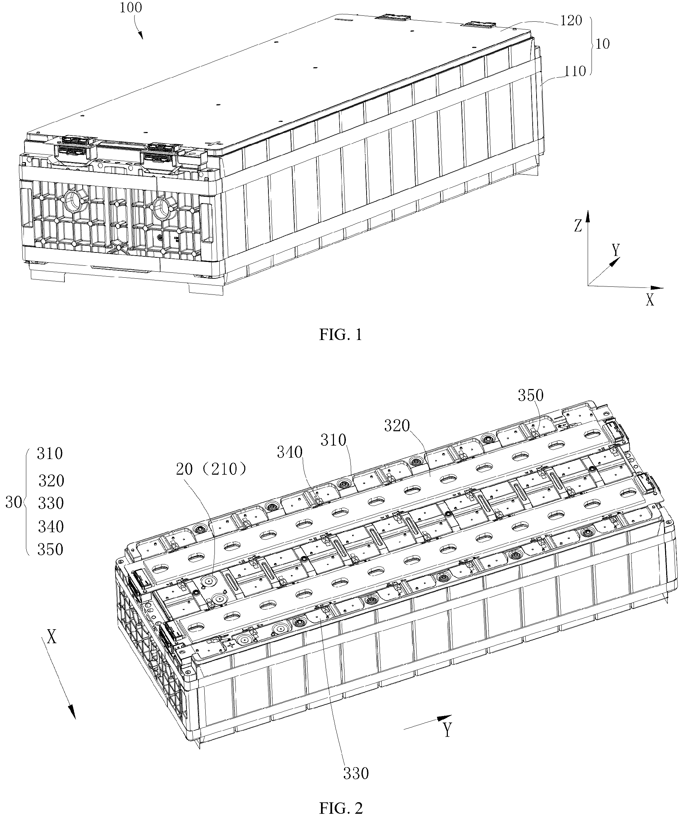

Referring to FIGS. 1 to 2, a battery pack 100 is provided according to an embodiment of the present invention. The battery pack 100 includes a housing 10, a plurality of electric cells 20, and a signal acquisition assembly 30. The signal acquisition assembly 30 is configured to connect the electric cells 20 to a BMS (Battery Management System) of the battery pack 100, such that the BMS system can acquire information such as voltage and temperature of each electric cell 20 in the battery pack 100.

In one embodiment, the housing 10 is of a frame structure that can accommodate the plurality of electric cells 20. The housing 10 is either fully or partially enclosed in a circumferential direction. Optionally, the housing 10 may include a box 110 having an accommodating cavity and a cover 120.

In one embodiment, the electric cell 20 is a secondary battery, which can specifically be a pouch-type secondary battery, a square secondary battery, or a cylindrical secondary battery. The plurality of electric cells 20 may be arranged in series, parallel or mixed within the housing 10. Alternatively, the plurality of electric cells 20 may be combined into a plurality of electric cell modules and placed within the housing 10. Each electric cell 20 is filled with an electrolyte solution, which contains electrolyte and serves as a carrier for ion transport in the battery, generally composed of lithium salt and organic solvent. During the charging and discharging process of a lithium battery, lithium ions move back and forth between the positive and negative electrodes. The electrolyte solution is the medium through which lithium ions migrate and transfer back and forth, creating a potential difference between the positive and negative electrodes of the battery, thereby generating current and enabling the battery to function normally.

As described in the background, during the recycling of the battery pack 100, the electric cells 20 have the characteristic of deformation and expansion. In addition, due to the influence of environmental factors, the battery pack 100 will inevitably be subjected to vibration during use, which can easily damage the signal acquisition circuit and pose a safety hazard.

To address the aforementioned issues, referring to FIGS. 2 to 5, the signal acquisition assembly 30 includes an insulating bracket 310 provided with a plurality of slots 311; a circuit board 320 provided on the insulating bracket 310; a plurality of connecting members 330 accommodated in the plurality of slots 311; and a plurality of connecting pieces 340. Two ends of each connecting piece 340 are connected to the circuit board 320 and one connecting member 330, respectively. Each connecting member 330 includes two rigid busbars 331 connected by a flexible portion 332. The two rigid busbars 331 are connected to poles 210 of adjacent two electric cells 20, respectively. The flexible portion 332 is bent in a direction away from the electric cell 20, and a top of the flexible portion 332 extends out of the slot 311.

Referring to FIGS. 2 to 4, the insulating bracket 310 is used to support and mount other elements of the signal acquisition assembly 30, and to isolate the circuit board 320 from the poles 210 of the electric cell 20. The insulating bracket 310 is provided with the plurality of slots 311, each slot 311 is configured to accommodate one connecting member 330. The insulating bracket 310 can be manufactured by injection molding, during which the plurality of slots 311 are formed simultaneously. The insulating bracket 310 is made of, for example, PC (polycarbonate), which is lightweight.

Referring to FIGS. 1, 2, and 4, in the battery pack 100, in a height direction of the battery pack 100 (i.e., Z direction), the electric cell 20 is located below the signal acquisition assembly 30, and the poles 210 of the electric cell 20 can be connected to the connecting member 330. The plurality of slots 311 are provided on an upper surface of the insulating bracket 310, and a bottom of each slot 311 is provided with two through holes 312. When the connecting member 330 is accommodated in the slot 311, the bottom of the connecting member 330 can be connected to the pole 210 of the electric cell 20 through the through hole 312.

In this embodiment, the plurality of electric cells 20 are arranged in a matrix. Specifically, multiple rows (e.g., three rows are shown in FIG. 2) of electric cells 20 are provided along an X direction, and multiple columns of electric cells 20 are provided along a Y direction. Each electric cell 20 has two poles 210. The poles 210 of adjacent two electric cells 20 in the same column are connected by one connecting member 330, and the poles 210 of adjacent two electric cells 20 in the same row are also connected by one connecting member 330. For each electric cell 20 in the leftmost and rightmost rows in the X direction, one pole 210 of one electric cell 20 is connected to a pole 210 of another electric cell 20 in the same row via one connecting member 330, and the other pole 210 is connected to the pole 210 of another electric cell 20 in the same column via another connecting member 330. For each electric cell 20 in the middle row in the X direction, the two poles 210 of one electric cell 20 are connected to the poles 210 of another electric cell 20 in the same column via one connecting member 330.

It should be understood that the number and arrangement of plurality of slots 311 should meet the connection requirements of the electric cells 20 when arranged in a matrix as described above. In this specific embodiment, the plurality of slots 311 are arranged in a matrix. Three rows of slots 311 are provided along the X direction, and multiple rows of slots 311 are provided along the Y direction.

The circuit board 320 is specifically located between adjacent two rows of slots 311. In this embodiment, two circuit boards 320 are provided in the X direction. The circuit board 320 can be specifically a rigid circuit board, a flexible circuit board (FPC), or a flexible wire harness, or a combination of rigid and flexible circuit boards.

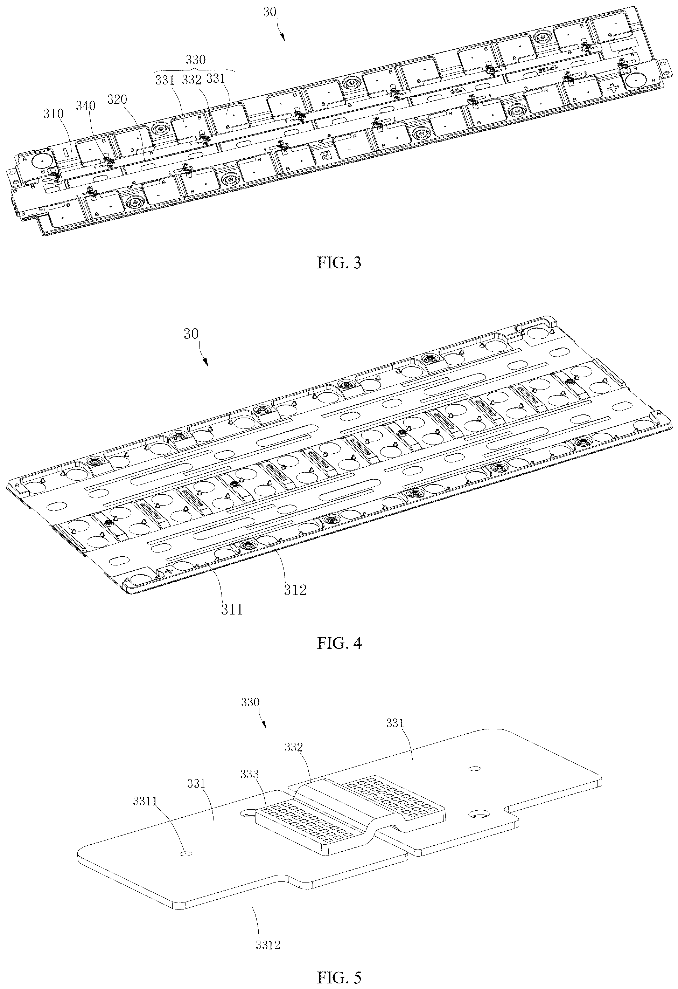

Referring to FIGS. 2 and 5, in one embodiment, the connecting member 330 includes two rigid busbars 331 connected by a flexible portion 332. The two rigid busbars 331 are connected to two poles 210 of adjacent two electric cells 20, respectively. The flexible portion 332 is bent in a direction away from the electric cell 20, and a top of the flexible portion 332 extends out of the slot 311. The connecting member 330 connects the poles 210 of adjacent two electric cells 20 along a length direction of the connecting member 330, and is connected to the circuit board 320 through the connecting piece 340. The connecting member 330 is made of, for example, aluminum alloy, copper alloy, nickel alloy, or non-metallic materials including an alloy plating layer.

In one embodiment, when the connecting member 330 connects adjacent two electric cells 20 in the X direction, the length direction of the connecting member 330 is the X direction. The two rigid busbars 331 and the flexible portion 332 are arranged along the X direction. One rigid busbar 331 of the connecting member 330 is connected to one pole 210 of one electric cell 20, and the other rigid busbar 331 is connected to one pole 210 of another electric cell 20. Meanwhile, each connecting member 330 is connected to the adjacent circuit board 320 via one connecting piece 340.

In another embodiment, when the connecting member 330 connects adjacent two electric cells 20 in the Y direction, the length direction of the connecting member 330 is the Y direction. The two rigid busbars 331 and the flexible portion 332 are arranged along the Y direction. One rigid busbar 331 of the connecting member 330 is connected to one pole 210 of one electric cell 20, and the other rigid busbar 331 is connected to one pole 210 of another electric cell 20. Meanwhile, each connecting member 330 is connected to the adjacent circuit board 320 via one connecting piece 340.

The rigid busbar 331 and the pole 210 of the electric cell 20 can be connected, for example, by welding. Specifically, referring to FIG. 5, the rigid busbar 331 is provided with a welding through hole 3311, and the pole 210 can be inserted into the welding through hole 3311 and then welded to the rigid busbar 331, thus ensuring a firm connection between the rigid busbar 331 and the pole 210.

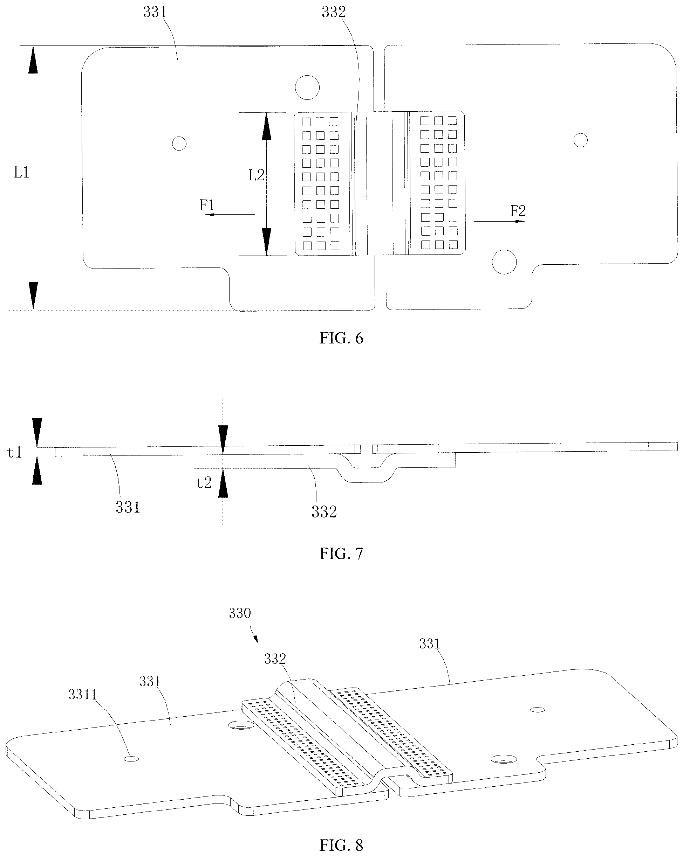

Referring to FIGS. 2 and 6, when adjacent two electric cells 20 connected by the connecting member 330 expand, the two rigid busbars 331 are subjected to stresses F1 and F2 in opposite directions, respectively. The flexible portion 332 can be deformed under the action of F1 and F2 to provide a buffer space for the electric cell 20, thereby offsetting the expansion and deformation of the electric cell 20, and preventing damage to the connection position between the rigid busbar 331 and the pole 210 of the electric cell 20. This greatly improves the reliability of electrical connections, enhances the overall safety of the battery pack 100, and thus extends the product's lifespan.

Optionally, the flexible portion 332 can be deformed when subjected to a force of 10 N to 40 N. In this way, the stress generated during normal use of the electric cell 20 can be promptly offset by the flexible portion 332. Optionally, the flexible portion 332 can be U-shaped, V-shaped, Z-shaped, or other structural shapes, which are more likely to deform under stress.

In one embodiment, the insulating bracket 310 is used to support and mount other elements in the signal acquisition assembly 30, which simplifies the architecture of the signal acquisition assembly 30. The connecting member 330 includes a combination of rigid busbars 331 and flexible portion 332, which not only can ensure the reliability of the connection with the pole 210 of electric cell 20, but also can provide a buffer space for the electric cell 20, allowing the expansion force of the battery to be released in the flexible portion 332, and avoiding damage to the connection between the rigid busbar 331 and the pole 210 of electric cell 20. In addition, the flexible portion 332 is bent in a direction away from the electric cell 20, and a top of the flexible portion 332 extends out of the slot 311. As such, when adjacent electric cells 20 move relative to each other, the top of the flexible portion 332 is deformed outside the slot 311. The top of the flexible portion 332 does not occupy the space inside the slot 311 when deforming, such that there is no need to reserve a large space inside the slot 311, which makes the battery pack 100 more compact.

Further, referring to FIGS. 5 and 6, two ends of the flexible portion 332 are welded to upper surfaces of the two rigid busbars 331, respectively. As shown in FIG. 5, a plurality of welding joints 333 are provided between ends of the flexible portion 332 and the upper surfaces of the rigid busbars 331. The welding method can be resistance welding, ultrasonic welding, laser welding, thermo-fusion welding and the like.

With this configuration, on the one hand, the entire flexible portion 332 is located above the rigid busbar 331. In the Y direction, the flexible portion 332 does not occupy the lateral dimension of the slot 311 at all, and the distance between the two rigid busbars 331 can be very small, making the battery pack 100 compact in the Y direction. On the other hand, the two ends of the flexible portion 332 are in surface contact with the two rigid busbars 331, and there is a large overlap area therebetween, which facilitates the welding of the flexible portion 332 and the rigid busbars 331.

In some embodiments, referring to FIGS. 6 and 7, the connecting member 330 satisfies L1*t1≥L2*t2, where L1 is an effective width of each rigid busbar 331, L2 is an effective width of the flexible portion 332, t1 is a thickness of the connecting member 330, and t2 is a thickness of the flexible portion 332.

The effective width of the rigid busbar 331 or the flexible portion 332 is a width of the rigid busbar 331 or the flexible portion 332 when the rigid busbar 331 or the flexible portion 332 participates in the transmission of conductive current as a conductor. In one embodiment, referring to FIGS. 5 to 7, when the connecting member 330 is used to connect adjacent two cells 20 in the same row, the effective width of the connecting member 330 is the effective dimension along the X direction. The thickness t1 is the dimension of the connecting member 330 along the Z direction. The connecting member 330 should meet a sufficient overcurrent value. The overcurrent capacity of the connecting member 330 is generally proportional to the cross-sectional area of the electrical connecting member 330 in the overcurrent direction. Therefore, the overcurrent capacity is designed based on the cross-sectional area L1*t1 of the rigid busbar 331, and the dimensions of the connecting member 330 satisfy L1*t1≥L2*t2.

In one embodiment, the dimensions of the connecting member 330 are designed based on the cross-sectional area of the rigid busbar 331, which can effectively ensure the overcurrent capacity of the connecting member 330. When designing the dimensions of the connecting member 330, the reference standard is simple and unique, thus simplifying the design process. Furthermore, this design also ensures that when L1*t1>L2*t2, the overcurrent capacity of the flexible portion 332 is less than that of the rigid busbar 331. Thus, when the current is too large, the flexible portion 332 will be fused first, breaking the physical connection between the flexible portion 332 and the rigid busbar 331, thereby enabling the connecting member 330 to have a safety function.

In addition, when the flexible portion 332 is connected to the rigid busbar 331, in the X direction, an edge contour of the flexible portion 332 is within a contour range of the rigid busbar 331. Specifically, referring to FIG. 5, the width of the flexible portion 332 may be less than the width of the rigid busbar 331. Alternatively, referring to FIG. 8, the width of the flexible portion 332 may be equal to the width of the rigid busbar 331.

As shown in FIG. 5, in some embodiments, the rigid busbar 331 has a rectangular shape with a notched corner 3312. The rectangular shape with the notched corner 3312 serves as a foolproof design.

In order to enable the connecting member 330 to have a safety function, in some embodiments, the flexible portion 332 includes a fusing region extending along a width direction of the connecting member 330. A width of the fusing region is the same as a width of the flexible portion 332, and a fusing point of the fusing region is less than a fusing point of the two rigid busbars 331.

Specifically, a length of the fusing region is less than the length of the flexible portion 332, while the width of the fusing region is the same as the width of the flexible portion 332. The fusing point of the fusing region is lower than the fusing point of the two rigid busbars 331. In this way, when the current is too large, the fusing region can be fused to break the physical connection with the rigid busbar 331, thereby enabling the connecting member 330 to have a safety function.

Optionally, the fusing region is located at an end or middle of the flexible portion 332. Optionally, two or more fusing regions are provided to ensure that the physical connection between the flexible portion 332 and the rigid busbar 331 can be quickly broken when the current is too large.

Optionally, a material of the fusing region may differ from a material of the remaining part of the flexible portion 332. For example, the material of the fusing region is aluminum, and the material of the remaining part of the flexible portion 332 is copper.

Optionally, the flexible portion 332 is provided with a first plating layer, and each rigid busbar 331 is provided with a second plating layer. The flexible portion 332 conducts the two rigid busbars 331 through a connection of the first plating layer and the second plating layer. A fusing point of the first plating layer is lower than a fusing point of the second plating layer. The first plating layer constitutes the fusing region. When the current is too large, the first plating layer is fused to break the physical connection with the rigid busbar 331, thereby enabling the connecting member 330 to have a safety function.

In one embodiment, the first plating layer is, for instance, an aluminum plating layer, and the second plating layer is, for instance, a copper plating layer. When the current is too large, the temperature of the first plating layer increases and the first plating layer fuses into droplets, causing the first plating layer, which was originally a continuous conductive region, to become discontinuous, resulting in at least one disconnected region. As a result, the two rigid busbars 331 on both sides are no longer in electrically connection, thereby reducing the probability of the entire battery being at risk when an electric cell experiences thermal runaway.

In one embodiment, the first plating layer may cover the entire surface of the flexible portion 332. Alternatively, the first plating layer may be elongated, with a width less than that of the flexible portion 332, and disposed along the length of the connecting member 330.

Furthermore, the flexible portion 332 includes a blocking region. The first plating layer is provided in the blocking region. Taking the first plating layer being elongated as an example, the blocking region has a barrier surrounding the first plating layer. When the first plating layer fuses into droplets, the droplets are blocked by the barrier and will not drip onto the rigid busbar 331, thus avoiding contamination of the electric cell.

In some embodiments, the rigid busbar 331 is fixed to the insulating bracket 310 by a plurality of screws. By adding fixing screws to the connecting member 330, the impact of vibration on the connecting member 330 can be effectively reduced.

Specifically, the fixing screws divide the connecting member 330 into a plurality of shorter segments, and each fixing screw becomes a fixing point, such that the stress generated by the vibration of the battery pack 100 is dispersed to a plurality of fixing points, which significantly reduces the stress amplitude of each connecting member 330 segment, thereby extending the fatigue life. In addition, the configuration of the fixing screws changes the inherent frequency of the connecting member 330, preventing it from resonating with the external vibration frequency, thereby reducing the vibration amplification effect.

In one embodiment, an end of the rigid busbar 331 is provided with a plurality of holes, and screws that are fixed to the insulating bracket 310 are mounted in the holes. The spacing of the screws is controlled in a range of 20 mm to 30 mm. The screws securely fix the connecting member 330 to the insulating bracket 310, thus limiting its free vibration amplitude. This allows vibration energy to be distributed to a plurality of fixing points, rather than concentrated on a single segment of the connecting member 330, thereby reducing local stress.

In other embodiments, the rigid busbar 331 may be riveted to the insulating bracket 310 by a plurality of rivets. The plurality of rivets form a plurality of riveting points, dispersing vibration energy and reducing local stress. The rivet material should be compatible with the material of the connecting member 330. For example, the materials for the connecting member 330 and the rivets can be either aluminum alloy or stainless steel.

In one embodiment, in the X direction, one end of the connecting piece 340 is connected to the connecting member 330, and the other end is connected to the circuit board 320. The connecting member 340 may be, for example, a nickel sheet with good conductivity, but is not limited thereto.

When the electric cell 20 expands and deforms, the connection between the connecting piece 340 and the circuit board 320 and the connecting member 330 will also be subjected to stress and tension, which may also pose a certain safety hazard to the connecting piece 340.

To address the aforementioned issues, in some embodiments, the connecting piece 340 is connected to the flexible portion 332. Specifically, an end of the connecting piece 340 is connected to an upper surface of the flexible portion 332. In this way, when the electric cell 20 expands and deforms, the flexible portion 332 can be deformed to release the stress, which reduces the tensile force transmitted to the connecting piece 340, thereby preventing the connecting piece 340 from falling off.

Furthermore, in order to ensure a reliable connection between the connecting piece 340 and the flexible portion 332, in some embodiments, the flexible portion 332 is specifically made of polyimide (PI) or polyester (PET) with a thickness of 25 µm to 50 µm. A surface of the flexible portion 332 is provided with a copper foil layer or a nickel foil layer with a thickness of 18 µm to 35 µm as a conductive layer. A surface of the copper foil layer is further provided with an anti-corrosion layer with a thickness of 0.5 µm to 2 µm. The anti-corrosion layer can be a nickel plating layer or a gold plating layer. The connecting piece 340 is specifically a nickel strip with a thickness of 0.5 µm to 2 µm. An overlap length between the nickel strip and the flexible portion 332 is in a range of 5 mm to 10 mm.

In this way, the flexible portion 332 and the connecting piece 340 each has a good flexibility while having a certain strength. There is a large contact area between the flexible portion 332 and the connecting piece 330, making them not easily corroded by external impurities after the two are connected, thus ensuring the reliability of the connection between the two. Using a copper foil layer or a nickel foil layer as an intermediate layer facilitates the connection of the flexible portion 332 and the connecting piece 340 by welding.

It should be noted that in other embodiments, the connecting piece 340 can also be connected to the rigid busbar 331. Further, an upper surface of the flexible portion 332 is provided with a groove, the connecting piece 340 is accommodated in the groove, and an upper surface of the connecting piece 340 is no higher than the upper surface of the flexible portion 332.

By embedding an end of the connecting piece 340 into the flexible portion 332, the end of the connecting piece 340 can be physically limited by the groove of the flexible portion 332, which can be regarded as an integral structure, thereby reducing the risk of detachment. In addition, an end of the connecting piece 340 is no higher than the upper surface of the flexible portion 332, so as not to increase the dimension of the connecting piece 330 in the Z direction.

Specifically, the shape of the end of the connecting piece 340 embedded in the flexible portion 332 matches the groove of the flexible portion 332. For example, the end of the connecting piece 340 embedded in the flexible portion 332 is rectangular, and the groove is also rectangular.

In some embodiments, the connecting member 330 includes a transition region connecting the rigid busbar 331 and the flexible portion 332. A thickness of the transition region gradually decreases from the rigid busbar 331 to the flexible portion 332, and a length of the transition region is in a range of 10 mm to 20 mm. The transition region can be specifically step-shaped, or a slope of the transition region is less than 1/10.

The thickness of the transition region gradually decreases from 0.5 mm to 0.2 mm, and a length of the transition region is 15 mm. In one embodiment, the transition region specifically includes three steps, with a thickness difference of 0.1 mm between each step and a transition length of 5 mm. In another embodiment, the slope of the transition region is 0.08.

By providing the stepped transition region or the transition region with the slope of less than 1/10, the risk of interface peeling caused by abrupt changes in stiffness during soft and hard connections can be avoided. In addition, the stepped transition region or the transition region with the slope of less than 1/10 can reduce the stress concentration factor. Calculations show that the stress concentration factor can be reduced by 30% to 40%. The stepped transition region, with the thickness abrupt change from the rigid busbar 331 to the flexible portion 332, is decomposed into a plurality of small steps, which reduces the magnitude of each thickness change, resulting in a small abrupt change in cross-sectional dimensions and thus a small stress concentration factor, thereby avoiding uneven stress distribution caused by abrupt changes in cross-section. By setting the slope of the transition region to less than 1/10, on the one hand, the thickness of the transition region gradually changes and the cross-sectional dimensions has a small abrupt change, resulting in a small stress concentration factor. On the other hand, a reasonable current distribution can be ensured, and the temperature gradient in the transition region is small. When preparing the rigid busbar 331 with a transition region, for example, 3D printing technology can be used to form a structure with complex thickness.

Furthermore, in some embodiments, the rigid busbar 331 is made of a copper alloy with a nickel-plated layer on its surface, and the flexible portion 332 is made of flexible copper foil. The transition region is made of copper-stainless steel composite material. By utilizing the stiffness difference of different materials, natural stress transition is achieved, avoiding stress concentration between the rigid busbar 331 and the flexible portion 332.

In one example, the rigid busbar 331 is made of C1100 copper with a thickness of 0.5 mm, and a nickel-plated layer with a thickness of 2 µm to 5 µm is formed on on the surface of the rigid busbar 331. The flexible portion 332 is made of polyimide or polyester substrate with a thickness of 25 µm, and a rolled copper layer with a thickness of 0.2 mm is provided on the surface of the substrate. The thickness of the transition region gradually decreases from 0.5 mm to 0.2 mm, and a length thereof is 15 mm.

When the battery is in use, the flexible portion 332 may need to be bent or vibrated frequently, and the fatigue resistance of the flexible portion 332 itself is an issue that needs to be considered.

To address the aforementioned issues, in some embodiments, an upper surface of the flexible portion 332 is provided with a plurality of corrugated protrusions extending in a direction perpendicular to the Z-direction. The corrugated protrusions can absorb vibration energy, reduce peak stress, and improve the fatigue resistance of the flexible portion 332. The corrugated protrusions extends in a direction perpendicular to the Z-direction, which can enhance the anti-vibration capability in the horizontal direction.

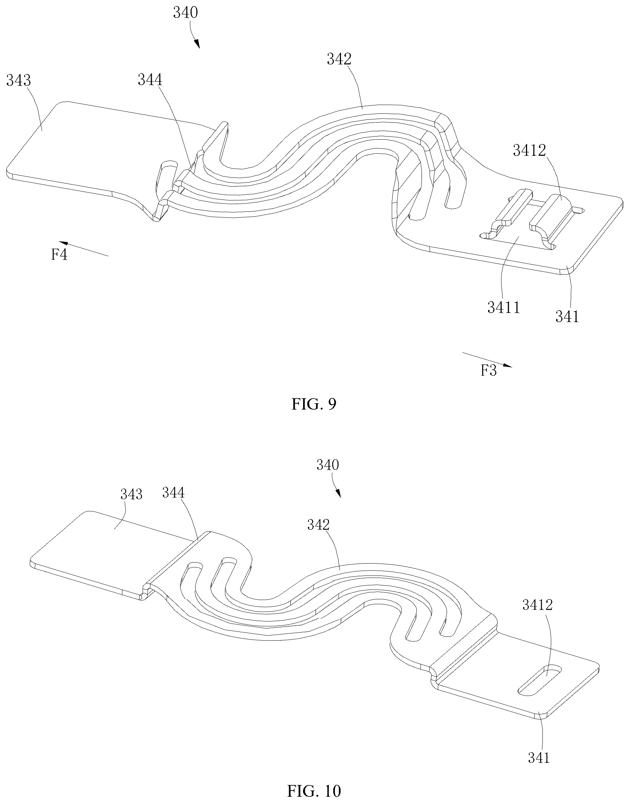

In order to further reduce the pulling effect of the flexible portion 332 on the connecting piece 340 when it deforms, in some embodiments, referring to FIG. 9, the connecting piece 340 is substantially S-shaped, and includes a hollow portion 342 having a plurality of hollows arranged side by side.

Specifically, the connecting piece 340 includes a first welding end 341, a hollow portion 342, and a second welding end 343 along a length direction thereof. The first welding end 341 and the second welding end 343 are welded to the circuit board 320 and the connecting member 330, respectively. The welding methods for the first welding end 341 and the second welding end 343 to the circuit board 320 or the connecting member 330 may be laser welding, ultrasonic welding, resistance welding, etc.

The hollow portion 342 is S-shaped and includes the plurality of hollows. The first welding end 341 and the second welding end 343 are located at two ends of the hollow portion 342, making the connecting piece 340 substantially S-shaped.

Referring to FIG. 9, when the two electric cells 20 connected by the connecting piece 340 expand and deform, the first welding end 341 and the second welding end 343 are subjected to forces F3 and F4, respectively. Forces F3 and F4 are in opposite directions. When the nickel sheet is subjected to two opposing forces, the nickel sheet is prone to breakage. At this time, the hollow portion 342 of the S-shaped structure can buffer and release the forces applying on the first welding end 341 and the second welding end 343, offset the expansion stress of the electric cell 20, which greatly improves the reliability of the acquired signal, improves the structural safety of the overall signal acquisition assembly 30, and thus extends the product's lifespan.

In addition, the plurality of hollows enable the connecting piece 340 to have good flexibility and tensile properties, and a strong ability to offset the expansion stress of the electric cell 20, ensuring that the connection between the connecting piece 340 and the flexible portion 332 is not stressed or is only minimally stressed, thereby preventing the two from detachment.

In other embodiments, the connecting piece 340 may be connected to the rigid busbar 331. The connecting piece 340 is also substantially S-shaped, and includes a hollow portion 342 having a plurality of hollows arranged side by side. At this time, when the battery expands and deforms, the rigid busbar 331 directly drives the connecting piece 340 to deform. Since the hollow portion 342 of the connecting piece 340 forms a multi-S-shaped structure, it has a plurality of buffer spaces, which can effectively offset the battery expansion stress.

In some embodiments, referring to FIGS. 9 and 10, the connecting piece 340 is provided with a reinforcing rib 344, so as to enhance the structural strength of the connecting piece 340, facilitate the manufacturing, transportation, assembly and other operations of the connecting piece 340, and avoid damage due to insufficient strength.

Specifically, as shown in FIG. 9, in one embodiment, the reinforcing rib 344 is provided on the hollow portion 342, and the reinforcing rib 344 is located on an inner side of the S-shaped hollow portion 342. As shown in FIG. 10, in another embodiment, the reinforcing rib 344 is provided between the hollow portion 342 and the first welding end 341, and the reinforcing rib 344 is located on an outside of the S-shaped hollow portion 342.

In some embodiments, the first welding end 341 is provided with an aperture 3411. Protective pieces 3142 protrude from two opposite walls of the aperture 3411. A thermistor can be provided at a position on the circuit board 320 corresponding aperture 3411. The protective piece 3142 can prevent the thermistor from being damaged by the elements above it.

In some embodiments, referring to FIGS. 2, 9 and 10, the plurality of hollows extend from an upper portion of the circuit board 320 to an upper portion of the slot 311. Specifically, the connecting piece 340 is provided with the aforementioned hollows in the remaining area between the first welding end 341 and the second welding end 343, resulting in a larger hollow area of the connecting piece 340, thus providing a stronger flexible tensile capability.

By providing the hollow portion 342, the connecting piece 340 has good flexible tensile characteristics, but it also brings the risk of weakening the strength of the new connecting piece 340 to a certain extent.

To address the aforementioned issues, referring to FIG. 2, in some embodiments, the battery pack 100 further includes an insulating adhesive 350 covering the hollow portion 342 and adhered to the connecting member 330, and the insulating adhesive 350 is embedded in the plurality of hollows.

Specifically, the insulating adhesive 350 is applied to the connecting piece 340 between each hollow, and the insulating adhesive 350 flows into the hollow. In this way, a layer of the insulating adhesive 350 is formed on the connecting piece 340, and the hollow is also filled with the insulating adhesive 350. The insulating adhesive 350 can increase the strength of the hollow portion 342. When subjected to battery expansion stress, the S-shaped connecting piece 340 deforms. The impact stress will first overcome the deformation of the adhesive and then transfer the force to the S-shaped portion, thereby releasing the battery expansion stress. The application of adhesive enhances the deformation reliability of the S-shaped connecting piece 340, prevents the S-shaped structure from being torn apart by a large force, thus protecting the acquisition signal from interruption, and extending the product's service life.

In some embodiments, referring to FIGS. 2, 3 and 9, the plurality of hollows extend from an upper portion of the circuit board 320 to an upper portion of the slot 311. In addition, the battery pack 100 further includes an insulating adhesive 350 covering the hollow portion 342 and adhered to the connecting member 330. The insulating adhesive 350 is embedded in the hollow and connected to the circuit board 320 or the connecting member 330.

In this way, the portion of the hollow located above the circuit board 320 is filled with the insulating adhesive 350, and this portion of the insulating adhesive 350 is adhered to the circuit board 320. In this way, the transition portion between the hollow portion 342 and the first welding end 341 is not easily torn off. The portion of the hollow located above the slot 311 is filled with the insulating adhesive 350, and this portion of the insulating adhesive 350 is adhered to the connecting member 330. In this way, the transition between the hollow portion 342 and the second welding end 343 is not easily torn off.

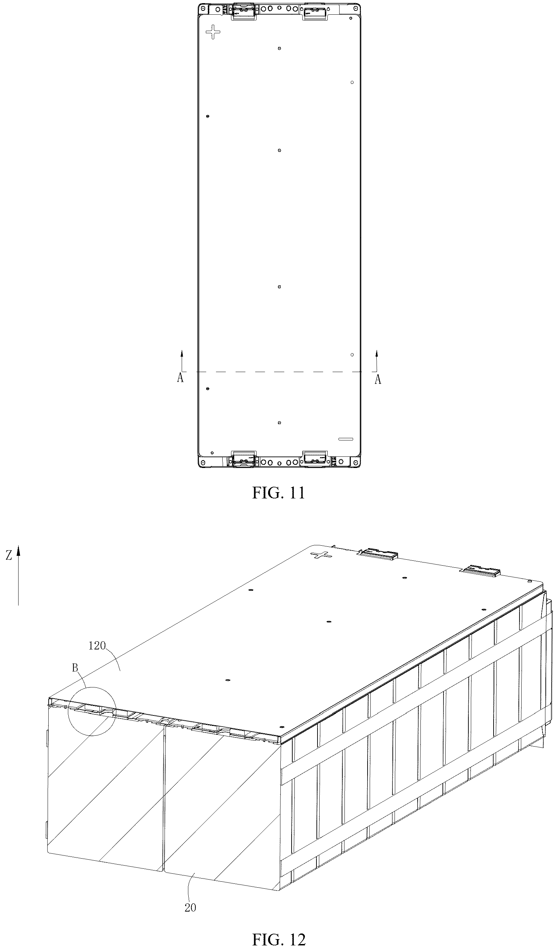

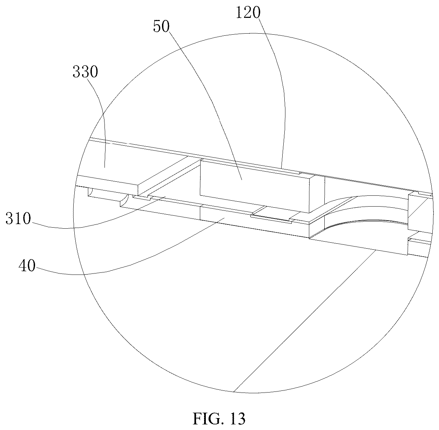

In some embodiments, referring to FIGS. 2, 11 to 13, a first buffer layer 40 is provided between the insulating bracket 310 and the electric cell 20. In the height direction of the battery pack 100, i.e., the Z direction, the first buffer layer 40 is located below the insulating bracket 310 and above the electric cell 20.

The first buffer layer 40 is made of a flexible material with cushioning capabilities. Optionally, the first buffer layer 40 may include one or more layers of foam.

The first buffer layer 40 can effectively buffer the circuit board 320, the connecting piece 340 and other structures in the signal acquisition assembly 30 in the Z direction, thus reducing the breakage of the connecting piece 340 caused by stress concentration in the Z direction.

In some embodiments, referring to FIGS. 1, 11 to 13, the battery pack 100 further includes a cover plate cooperated with the housing 10. The cover plate is located on a side of the signal acquisition assembly 30 away from the electric cell 20. The battery pack 100 further includes a second buffer layer 50, and the second buffer layer 50 is provided between the circuit board 320 and the cover plate. The second buffer layer 50 is made of a flexible material with cushioning capabilities. Optionally, the second buffer layer 50 may include one or more layers of foam. The second buffer layer 50 can effectively buffer the circuit board 320, the connecting piece 340 and other structures in the signal acquisition assembly 30 in the Z direction, thus reducing the breakage of the connecting piece 340 caused by stress concentration in the Z direction.

In some embodiments, the first buffer layer 40 and the second buffer layer 50 are provided simultaneously to form a sandwich structure, which can buffer the signal acquisition assembly 30 in the Z direction, thereby achieving a better buffering effect.

In the present invention, unless otherwise explicitly specified and defined, the terms "mounted", "coupled", "connected", and "fixed" should be understood in a broad sense. For example, it may be a fixed connection, or a detachable connection, or integrated; it may be a mechanical connection, or an electrical connection; it may be a direct connection, an indirect connection through an intermediate medium, it may be an internal connection between two elements, or an interaction between two elements. For those skilled in the art, the specific meaning of the aforementioned terms in the present invention can be understood according to specific situations.

In the present invention, unless otherwise explicitly specified and defined, a first feature being "on" or "under" a second feature may mean that the first feature is in direct contact with the second feature, or the first feature is in indirect contact with the second feature via an intermediate medium. Furthermore, the first feature being "above", "over", or "on" the second feature may refer to that the first feature is directly above or obliquely above the second feature, or refer to that the height of the first feature is greater than the height of the second feature. The first feature being "below", "underneath" or "under" the second feature may refer to that the first feature is directly below or obliquely below the second feature, or refer to that the height of the first feature is less than the second feature.

It should be noted that, if an element is referred to as being "fixed to" or "disposed on" another element, the element may be directly on another element or there may be an intermediate element therebetween. If an element is referred to as "connected to" another element, the element may be directly connected to another element or there may be an intermediate element therebetween. If present, the terms "vertical", "horizontal", "upper", "lower", "left", "right", and similar expressions used herein are for illustrative purposes only and are not meant to be the only means of implementation.

## Claims

1. A battery pack (100), comprising:
a housing (10);
a plurality of electric cells (20) accommodated in the housing (10); and
a signal acquisition assembly (30) comprising:
an insulating bracket (310) provided with a plurality of slots (311);
a circuit board (320) provided on the insulating bracket (310);
a plurality of connecting members (330) accommodated in the plurality of slots (311); and
a plurality of connecting pieces (340),
wherein two ends of each connecting piece (340) are connected to the circuit board (320) and one connecting member (330), respectively, each connecting member (330) comprises two rigid busbars (331) connected by a flexible portion (332), the two rigid busbars (331) are connected to poles (210) of adjacent two electric cells (20), respectively.

2. The battery pack (100) according to claim 1, wherein two ends of the flexible portion (332) are welded to upper surfaces of the two rigid busbars (331), respectively.

3. The battery pack (100) according to claim 1, wherein the connecting member (330) satisfies L1*t1≥L2*t2, wherein L1 is a width of each rigid busbar (331), L2 is a width of the flexible portion (332), t1 is a thickness of the connecting member (330), and t2 is a thickness of the flexible portion (332).

4. The battery pack (100) according to claim 1, wherein the flexible portion (332) comprises a fusing region extending along a width direction of the connecting member (330), a width of the fusing region is a same as a width of the flexible portion (332), and a fusing point of the fusing region is less than a fusing point of the two rigid busbars (331).

5. The battery pack (100) according to claim 4, wherein the flexible portion (332) is provided with a first plating layer, each rigid busbar (331) is provided with a second plating layer, a fusing point of the first plating layer is lower than a fusing point of the second plating layer, the flexible portion (332) conducts the two rigid busbars (331) through a connection of the first plating layer and the second plating layer, and the first plating layer constitutes the fusing region;
optionally, the flexible portion (332) comprises a blocking region, and the first plating layer is provided in the blocking region.

6. The battery pack (100) according to claim 1, wherein the connecting piece (340) is connected to the flexible portion (332), the flexible portion (332) is bent in a direction away from the electric cell (20), and a top of the flexible portion (332) extends out of the slot (311); optionally, an upper surface of the flexible portion (332) is provided with a groove, the connecting piece (340) is accommodated in the groove, and an upper surface of the connecting piece (340) is no higher than the upper surface of the flexible portion (332).

7. The battery pack (100) according to claim 1 or 6, wherein the connecting piece (340) is substantially S-shaped, and comprises a hollow portion (342) having a plurality of hollows arranged side by side;
optionally, the plurality of hollows extend from an upper portion of the circuit board (320) to an upper portion of the slot (311);
optionally, the battery pack (100) further comprising an insulating adhesive (350) covering the hollow portion (342) and adhered to the connecting member (330), the insulating adhesive (350) being embedded in the plurality of hollows.

8. The battery pack (100) according to claim 1, further comprising a first buffer layer (40) provided between the insulating bracket (310) and the electric cell (20);
optionally, the battery pack (100) further comprising a cover plate and a second buffer layer (50), wherein the cover plate is cooperated with the housing (10) and is located on a side of the signal acquisition assembly (30) away from the electric cell (20), and the second buffer layer (50) is provided between the circuit board (320) and the cover plate.

9. The battery pack (100) according to claim 1, wherein the flexible portion (332) is capable of be deformed when subjected to a force of 10 N to 40 N.

10. The battery pack (100) according to claim 1, wherein the rigid busbar (331) is fixed to the insulating bracket (310) by a plurality of screws.

11. The battery pack (100) according to claim 1, wherein the rigid busbar (331) is riveted to the insulating bracket (310) by a plurality of rivets.

12. The battery pack (100) according to claim 1, wherein the flexible portion (332) is made of polyimide or polyester with a thickness of 25 µm to 50 µm, the connecting piece (340) is a nickel strip with a thickness of 0.5 µm to 2 µm.

13. The battery pack (100) according to claim 1, wherein the connecting member (330) comprises a transition region connecting the rigid busbar (331) and the flexible portion (332), and the transition region is a step-shaped, or a slope of the transition region is less than 1/10.

14. The battery pack (100) according to claim 1, wherein an upper surface of the flexible portion (332) is provided with a plurality of corrugated protrusions extending in a direction perpendicular to a height direction of the battery pack (100).

15. The battery pack (100) according to claim 1, wherein the connecting piece (340) is provided with a reinforcing rib (344).
